# EUROPÄISCHE PATENTSCHRIFT

(11) **EP 1 411 338 B1**
(45) Veröffentlichungstag und Bekanntmachung des Hinweises auf die Patenterteilung: **24.11.2010**
(21) Anmeldenummer: 03023381.1
(22) Anmeldetag: 16.10.2003
(51) Int. Cl.: G01M 7/02

(54) **Prüfschrank mit einer Einrichtung zum Temperieren und/oder Klimatisieren**
Temperature controlled and/or air conditioned test chamber
Chambre d'essai avec un dispositif de contrôle de la température et/ou de la climatisation

(30) Priorität: 18.10.2002 DE 10248899
(43) Veröffentlichungstag der Anmeldung: 21.04.2004
(73) Patentinhaber: WEISS UMWELTTECHNIK GmbH, D-35447 Reiskirchen (DE)
(72) Erfinder: Hehl, Karl-Heinz, 35394 Giessen (DE)
(74) Vertreter: Stoffregen, Hans-Herbert

(56) Entgegenhaltungen:
- DE-A1- 4 330 015
- FR-A- 2 705 457
- US-A1- 2002 092 354
- PATENT ABSTRACTS OF JAPAN Bd. 007, Nr. 224 (P-227), 5. Oktober 1983 (1983-10-05) & JP 58 115340 A (KOKUSAI KIKAI SHINDOU KENKYUSHO:KK), 9. Juli 1983 (1983-07-09)

## Beschreibung

Die Erfindung bezieht sich auf einen Prüfschrank mit zumindest einer Einrichtung zum Temperieren und/oder Klimatisieren eines Prüfraums, der umfangsseitig von Seitenwandungen begrenzt ist und bodenseitig einen in Bewegung versetzbaren Tisch aufweist, der Boden des Prüfschranks ist.

In entsprechenden sogenannten Vibrations-Prüfschränken werden beispielsweise Fahrzeugheizungen oder -klimaanlagen sowie ihre Komponenten getestet. Dabei werden zum Beispiel Temperatur, Feuchtigkeit und mechanische Schwingungen als Einflussgrößen berücksichtigt.

Die Prüfgegenstände werden dabei auf auch als MAST-Tables (Multi-Axis-Shaker-Table) bezeichnete Tische aufgespannt, die durch am Tisch angebrachte Manipulatoren horizontal und/oder vertikal ein- oder mehrachsig beschleunigt werden.

Zur Durchführung entsprechender Prüfungen bei definierten klimatischen Bedingungen wird der Tisch üblicherweise in einer Temperatur- oder Klimakammer aufgestellt. Dabei sind entsprechend aufwendige Maßnahmen zur Abdichtung der Stangen, die die Kräfte der außenliegenden Manipulatoren auf den Tisch übertragen; erforderlich. Diese Abdichtungen - in der Regel 6 Abdichtungen - müssen für den Temperatur- und Klimabereich der Prüfkammer und den Schwingbereich (Frequenz und Amplitude) der Manipulatoren ausgelegt sein.

Ein Prüfschrank der eingangs genannten Art in Form einer Umgebungstestvorrichtung ist der DE-A-43 30 015 zu entnehmen. Um Container zu testen, werden diese auf einem Vibrationsstand angeordnet, der über Vibrationseinrichtungen mit einem Schwimmfundament verbunden ist, das gegenüber einem Untergrund gedämpft ist. Einrichtungen zur Temperatur- und Feuchtigkeitseinstellung sind zum einen an dem zu testenden Container und zum anderen auf dem Schwimmfundament angeordnet.

Aus der JP-A-58 11 53 40 ist ein Vibrationsprüfschrank bekannt. Dabei geht von einer unterhalb des Prüfschranks vorhandenen Vibrationseinrichtung eine Achse aus, die abgedichtet den Boden des Prüfschranks durchsetzt, und mit einem unterhalb des Prüfschranks vorhandenen Vibrationstisch verbunden ist.

Der vorliegenden Erfindung liegt das Problem zugrunde, einen Prüfschrank der eingangs genannten Art so auszubilden, dass dessen Bodenfläche optimal für in Bewegung zu versetzende Prüfgegenstände ausgenutzt werden kann, wobei gleichzeitig sichergestellt sein soll, dass die Schwingungen nicht merklich auf die für die Temperierung bzw. Klimatisierung des Prüfschrankes benötigte Einrichtung bzw. Einrichtungen übertragen werden.

Erfindungsgemäß wird das Problem im Wesentlichen dadurch gelöst, dass die zumindest eine Einrichtung in einem ersten Bereich des Prüfschrankes angeordnet ist, der gegenüber dem Tisch durch zumindest abschnittsweise flexibel ausgebildete Seitenwandungen mechanisch entkoppelt ist. Dabei ist der erste Bereich des Prüfschrankes insbesondere Decken- bzw. Kopfbereich, der seinerseits von einer ortsfesten außerhalb des Prüfschrankes vorhandenen Befestigung ausgeht.

Erfindungsgemäß erfolgt eine Entkopplung zwischen dem den Boden des Prüfschrankes bildenden Tisch und dem Decken- bzw. Kopfbereich des Prüfschrankes durch flexibel und thermisch isolierend ausgebildete Seitenwandungen, wobei der Decken- bzw. Kopfbereich an einem ruhenden Gestell oder an einer Gebäudewand oder -decke befestigt ist. Durch diese Maßnahmen ist sichergestellt, dass die Schwingungen des Tisches auf den Decken- bzw. Kopfbereich und somit auf die zumindest eine Einrichtung, über die die Temperierung bzw. Klimatisierung des Prüfraums vorgenommen wird, nicht erfolgt. Somit sind aufwendige Vorkehrungen zur Abdichtung der außen liegenden Manipulatoren des Tisches gegenüber dem Kammerinneren nicht erforderlich, da der Tisch selbst Bodenfläche bzw. -wandung des Prüfschrankes ist. Folglich ist eine uneingeschränkte Bewegungsfreiheit des Tisches innerhalb seiner technischen Grenzen gegeben, ohne dass die Komponenten der Klimatisierungs- bzw. Temperierungseinrichtung mitbeschleunigt und damit stark belastet werden.

Geht der Decken- bzw. Kopfbereich, also das Kopfteil des Prüfschrankes vorzugsweise von einer Gebäudedecke aus, so kann dieses auch über eine Halterung bzw. Gestänge mit einer Wand oder gegebenenfalls auch mit dem Boden eines Raumes verbunden werden.

Der Decken- bzw. Kopfbereich kann allein durch eine eigensteife Kopfwandung des Prüfschrankes gebildet sein, von der sich bis zu dem den Boden des Prüfschrankes bildenden Tisch sich erstreckende flexible und isolierende Seitenwandungen ausgehen. Der Decken- bzw. Kopfbereich des Prüfschrankes kann jedoch auch haubenförmig ausgebildet sein, also umlaufend abschnittsweise die Seitenwandungen bildende eigensteife Abschnitte aufweisen, wobei in zumindest einem Abschnitt ein Fenster und/oder eine verschließbare Öffnung (Tür) integriert sein kann, um den Prüfraum während der Überprüfung von Gegenständen beobachten und den MAST-Tisch bestücken zu können.

Um den Prüfraum rundum zugänglich zu machen, werden die flexiblen Wandungen von dem Tisch gelöst und angehoben, so dass Prüfgegenstände auf dem Tisch befestigt bzw. von diesem entfernt werden können.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung einer ersten Ausführungsform eines Prüfschrankes im Längsschnitt,
- Fig. 2: eine zweite Ausführungsform eines Prüfschrankes im Längsschnitt und
- Fig. 3: eine Variante des Prüfschrankes nach Fig. 2.

In den Fig. sind rein prinzipiell Prüfschränke 10, 100 dargestellt, um eine Prüfung von Gegenständen 12 in Abhängigkeit von z.B. Temperatur, Feuchtigkeit und/oder mechanischen Schwingungen als Einflussgrößen zu prüfen. Dabei werden in der nachfolgenden Beschreibung grundsätzlich für gleiche Elemente gleiche Bezugszeichen verwendet.

Um den Gegenstand 12 in Schwingung zu versetzen, wird dieser auf einen Tisch 14 angeordnet. Boden des Prüfschrankes 10, 100 ist der Tisch 14, der den Prüfraum 16, 116 bodenseitig, also nach unten begrenzt. Bei dem Tisch 14 handelt es sich um einen solchen, der durch geeignete Manipulatoren horizontal und/oder vertikal sowie ein- und/oder mehrachsig beschleunigt werden kann. Dies soll rein prinzipiell durch die Pfeile 18, 20 symbolisiert werden.

Um den Prüfraum 16, 116 zu temperieren bzw. zu klimatisieren, sind in diesem Einrichtungen wie Wärmetauscher 18 und Ventilatoren 20 vorhanden, die in dem Prüfraum 16, 116 mechanisch entkoppelt zu dem Tisch 14 angeordnet sind.

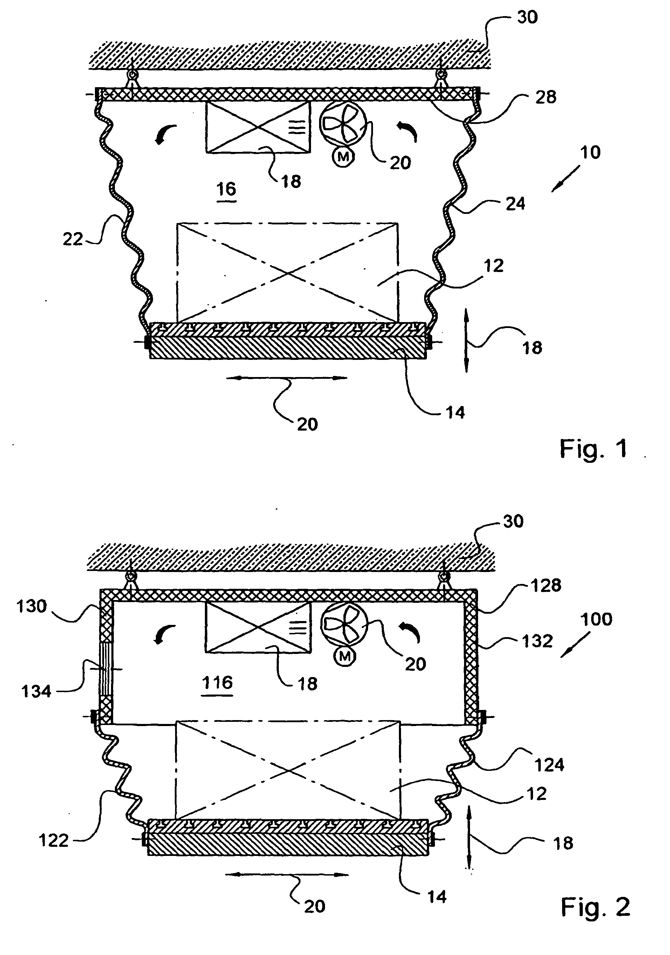

Diese mechanische Entkopplung wird nach dem Ausführungsbeispiel der Fig. 1 dadurch erreicht, dass von dem den Boden des Prüfraums 16 bildenden Tisch 14 flexible und isolierende Seitenwandungen 22, 24 ausgehen, die mit einem ersten Bereich des Prüfschrankes 10 in Form einer eigensteifen Kopf- bzw. Deckenwandung 28 des Prüfschrankes 10 verbunden sind, die ihrerseits im Ausführungsbeispiel von einer tragenden Decke 30 eines Raums oder einem ruhenden Gestell abgehängt ist. An der Kopf- bzw. Deckenwandung 28 des Prüfschrankes 18 sind die das Temperieren bzw. Klimatisieren des Prüfraums 16 ermöglichenden Einrichtungen wie Wärmetauscher 18 und Ventilator 20 befestigt.

Um den Prüfraum 16 zugänglich zu machen, ist es nur erforderlich, dass die Seitenwandungen 22, 24 von dem Tisch 14 gelöst und ziehharmonikaartig zusammengedrückt werden. Andere Möglichkeiten zum Zugänglichmachen des Prüfraums 16 sind selbstverständlich gleichfalls realisierbar. So bestünde die Möglichkeit, nur eine der Seitenwandungen 22, 24 von dem Tisch 14 zu entfernen bzw. diese von der Kopfwandung 28 zu lösen.

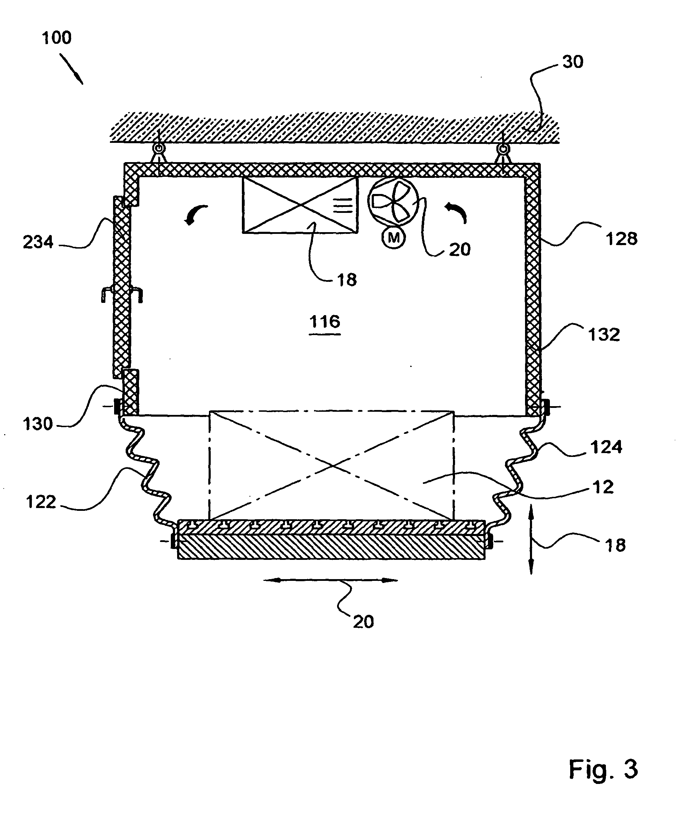

Nach den Ausführungsbeispielen der Fig. 2 und 3 weist der Prüfschrank 100 ein haubenförmiges Kopfteil 128 auf, von dessen eigensteifen Seitenwandabschnitten 130, 132 entsprechend dem Ausführungsbeispiel nach der Fig. 1 flexible und isolierende Seitenwandungen 122, 124 ausgehen, die mit dem Boden verbunden sind, d. h. diesen peripher umgeben. Der Boden wird erfindungsgemäß durch den Tisch 14 gebildet.

Des Weiteren ist in dem haubenförmigen Kopfteil 128, und zwar im Ausführungsbeispiel der Fig. 2 in dem Seitenwandabschnitt 130 ein Fenster 134 und/oder eine Öffnung wie Tür vorgesehen, um den Innenraum des Prüfraums 116 überwachen und/oder den MAST-Tisch 14 bestücken zu können.

Nach der Darstellung der Fig. 3 kann eine durch z.B. eine Tür 234 oder eine Klappe verschließbare Öffnung in einer der eigensteifen Seitenwandabschnitte - im Ausführungsbeispiel in dem Seitenwandabschnitt 130 - vorhanden sein.

Ferner ist aus den Fig. ersichtlich, dass die flächige Erstreckung des Tisches 14 geringer als die des Kopfteils 28, 128 ist, so dass ein raumsparendes Anordnen ermöglicht ist. Selbstverständlich können flächige Erstreckungen von Tisch 14 und Kopfteil 28, 128 gleich oder Kopfteil 28, 128 größer als der Tisch 14 sein.

## Patentansprüche

1. Prüfschrank (10, 100) mit zumindest einer Einrichtung (18, 20) zum Temperieren und/oder Klimatisieren eines Prüfraums (16, 116), der umfangsseitig von Seitenwandungen (22, 24, 122, 124) begrenzt ist und bodenseitig einen in Bewegung versetzbaren Tisch (14) aufweist,
der Boden des Prüfschrankes (10, 100) ist,
**dadurch gekennzeichnet,**
**dass** die zumindest eine Einrichtung (18, 20) in einem ersten Bereich des Prüfschrankes angeordnet ist, der gegenüber dem Tisch durch zumindest abschnittsweise flexibel ausgebildete Seitenwandungen (22, 24, 122, 124) mechanisch entkoppelt ist.

2. Prüfschrank nach Anspruch 1,
**dadurch gekennzeichnet,**
**dass** der erste Bereich des Prüfschrankes (10, 100) Decken- bzw. Kopfbereich von diesem ist, der seinerseits von einer ortsfesten außerhalb des Prüfschrankes vorhandenen Befestigung (30) ausgeht.

3. Prüfschrank nach Anspruch 1 oder 2,
**dadurch gekennzeichnet,**
**dass** die Befestigung Wand oder Decke (30) eines Raumes oder ein freitragendes Gestell ist.

4. Prüfschrank nach zumindest einem der vorhergehenden Ansprüche,
**dadurch gekennzeichnet,**
**dass** die Kopfwandung (28) des Prüfschrankes (10) eigensteif ist und von dieser bis zu dem den Boden des Prüfschrankes bildenden Tisch (14) sich erstreckende flexible isolierende Seitenwandungen (22, 24) ausgehen.

5. Prüfschrank nach zumindest einem der vorhergehenden Ansprüche,
**dadurch gekennzeichnet,**
**dass** der Kopfbereich (128) des Prüfschrankes (100) haubenförmig ausgebildet und eigensteif ist.

6. Prüfschrank nach zumindest einem der vorhergehenden Ansprüche,
**dadurch gekennzeichnet,**
**dass** die zumindest eine Einrichtung (18, 20) von der Kopfwandung (28) bzw. von dem haubenförmigen Kopfbereich (128) des Prüfschrankes (10, 100) ausgeht.

7. Prüfschrank nach zumindest einem der vorhergehenden Ansprüche,
**dadurch gekennzeichnet,**
**dass** der haubenförmige Kopfbereich (128) ein Fenster (134) und/oder eine verschließbare Öffnung wie Klappe oder Tür (234) aufweist.

8. Prüfschrank nach zumindest einem der vorhergehenden Ansprüche,
**dadurch gekennzeichnet,**
**dass** Querschnitt des Tisches (14) geringer, gleich oder größer als Querschnitt des Prüfschrankes (10, 100) in seinem Kopfbereich (28, 128) ist.

## Claims

1. Test chamber (10, 100) having at least one device (18, 20) for temperature control and/or air-conditioning of a test room (16, 116) which is limited on the circumferential side by side walls (22, 24, 122, 124) and has at the bottom a table (14) that can be set into motion and is the bottom of the test chamber (10, 100),
**wherein**
the at least one device (18, 20) is arranged inside a first area of the test chamber which is mechanically detached relative to the table by side walls (22, 24, 122, 124) designed flexibly at least in some sections.

2. Test chamber according to Claim 1,
**wherein**
the first area of the test chamber (10, 100) is the ceiling or top area thereof which in turn originates from a stationary fastener provided outside the test chamber.

3. Test chamber according to Claim 1 or 2,
**wherein**
the fastener is the wall or ceiling (30) of a room or a self-supporting frame.

4. Test chamber according to at least one of the preceding claims,
**wherein**
the top wall (28) of the test chamber (10) is inherently stiff, and flexible insulating side walls (22, 24) extending from said wall to the table (14) forming the bottom of the test chamber originates from said wall.

5. Test chamber according to at least one of the preceding claims,
**wherein**
the top area (128) of the test chamber (100) is designed like a hood and is inherently stiff.

6. Test chamber according to at least one of the preceding claims,
**wherein**
the at least one device (18, 20) originates from the top wall (28) or from the hood-like top area (128) of the test chamber (100).

7. Test chamber according to at least one of the preceding claims,
**wherein**
the hood-like top area (128) has a window (134) and/or a closable opening such as a flap or door (234).

8. Test chamber according to at least one of the preceding claims,
**wherein**
the cross-section of the table (14) is smaller than, equal to or larger than the cross-section of the test chamber (10, 100) at its top area (28, 128).

## Revendications

1. Armoire d'essai (10, 100) avec au moins un dispositif (18, 20) pour équilibrer et/ou conditionner la température d'une chambre d'essai (16, 116), qui est limitée sur ses côtés par des parois latérales (22, 24, 122, 124) et présente dans sa partie inférieure un plateau (14) pouvant être mis en mouvement et qui est le fond de l'armoire d'essai (10, 100),
**caractérisée en ce**
**que** l'au moins un dispositif (18, 20) est disposé dans une première zone de l'armoire d'essai qui est mécaniquement découplée du plateau par des parois latérales (22, 24, 122, 124) flexibles au moins partiellement.

2. Armoire d'essai selon la revendication 1,
**caractérisée en ce**
**que** la première zone de l'armoire d'essai (10, 100) est la zone de couverture ou supérieure de ladite armoire et part d'une fixation (30) à demeure située hors de l'armoire d'essai.

3. Armoire d'essai selon la revendication 1 ou 2,
**caractérisée en ce**
**que** la fixation est un mur ou un plafond (30) d'un local, ou un cadre en porte-à-faux.

4. Armoire d'essai selon au moins l'une des revendications précédentes,
**caractérisée en ce**
**que** la paroi supérieure (28) de l'armoire d'essai (10) est rigide en elle-même et qu'à partir d'elle et jusqu'au plateau (14) formant le fond de l'armoire d'essai s'étendent des parois latérales (22, 24) flexibles isolantes.

5. Armoire d'essai selon au moins l'une des revendications précédentes,
**caractérisée en ce**
**que** la zone supérieure (128) de l'armoire d'essai (100) a la forme d'une hotte et est rigide en elle-même.

6. Armoire d'essai selon au moins l'une des revendications précédentes,
**caractérisée en ce**
**que** l'au moins un dispositif (18, 20) part de la paroi supérieure (28) ou de la zone supérieure (128) en forme de hotte de l'armoire d'essai (10, 100).

7. Armoire d'essai selon au moins l'une des revendications précédentes,
**caractérisée en ce**
**que** la zone supérieure (128) en forme de hotte présente une fenêtre (134) et/ou une ouverture pouvant être fermée telle qu'un volet ou une porte (234).

8. Armoire d'essai selon au moins l'une des revendications précédentes,
**caractérisée en ce**
**que** la section transversale du plateau (14) est inférieure, égale ou supérieure à la section transversale de l'armoire d'essai (10, 100) dans sa zone supérieure (28, 128).
